# EUROPEAN PATENT APPLICATION

(11) **EP 4 537 965 A1**
(43) Date of publication of application: **16.04.2025**
(21) Application number: 23203554.3
(22) Date of filing: 13.10.2023
(51) Int. Cl.: B23B 27/16

(54) **A TURNING TOOL, A TURNING INSERT, A TURNING TOOL BODY AND METHODS FOR PRODUCING A TURNING TOOL AND A TURNING INSERT**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 Sandviken (SE)
(74) Representative: Sandvik

(57) **Abstract**

The invention relates to a turning tool (1) comprising a tool body (2) and a cutting insert (3a). The tool body comprises an insert seat with a bottom surface and two side wall sections. A stiff member (16) interconnects the side wall sections at upper parts thereof and is provided with stop surfaces. The cutting insert (3a) comprises top (7) and bottom surfaces interconnected by a circumferential side surface (9) and two opposite nose portions (10a) provided with cutting edges. The cutting insert further comprises contact surfaces (17a-17d) on the top surface thereof associated with and configured to bear against to get support by the stop surfaces on the stiff member in a mounted state of the tool. The invention also relates to a cutting insert and tool body for such a tool and methods for producing a turning tool and a cutting insert.

## Description

### TECHNICAL FIELD OF THE INVENTION

The present invention belongs to the technical field of metal cutting. More specifically the present invention belongs to the field of turning tools used for metal cutting in machines, such as CNC-machines, and cutting inserts therefor.

### BACKGROUND OF THE INVENTION AND PRIOR ART

The present invention relates to a turning tool according to the preamble of claim 1, a cutting insert according to the preamble of claim 11, a tool body according to the preamble of claim 20, a method for producing a turning tool according to claim 23 as well as a method for producing a cutting insert according to claim 27.

The present invention refers to a turning tool according to the preamble of claim 1. In other words, the present invention refers to a turning tool comprising a tool body and a cutting insert,
the tool body having at one end thereof a coupling portion configured for attachment to a machine tool, and at another end thereof an insert seat configured to accommodate the cutting insert in a state of use of the turning tool,
wherein the insert seat comprises
   - a bottom support surface and first and second side wall sections extending along at least a part of the bottom support surface on opposite lateral sides thereof, wherein the bottom support surface and the first and second side wall sections together define a space for receiving at least a part of the cutting insert in said state of use, and
   - a first stop surface arranged at the first side wall section or at a stiff member rigidly connected therewith,
wherein the cutting insert comprises
   - a top surface,
   - an opposite bottom surface by which the cutting insert is configured to bear on the bottom support surface of the insert seat in said state of use,
   - a circumferential side surface connecting the top surface and the bottom surface,
   - a first nose portion,
   - a first cutting edge arranged at a transition between the top surface and the circumferential side surface at the first nose portion,
      wherein a first reference plane is located parallel to and between the top surface and the bottom surface, wherein a center axis of the cutting insert extends perpendicular to the first reference plane,
      wherein a second reference plane extends perpendicular to the first reference plane and through a center of the first nose portion and the center axis of the cutting insert, and
      wherein a third reference plane extends perpendicular to the first and second reference planes and through the center axis of the cutting insert,
      wherein,
      the cutting insert further comprises a first contact surface associated with the first stop surface of the insert seat,
      the first stop surface of the insert seat is configured to receive the first contact surface of the cutting insert bearing against it, to provide a stop for the first contact surface in a direction along a longitudinal extension of the insert seat, measured centrally between a front and a rear end thereof, and thereby to define a fixed position in the insert seat for the cutting insert in said direction, in said state of use.

Such a turning tool is already known from EP 4091749 A1, which discloses a turning tool (1) comprising a tool body (3) and a pock-et/insert seat (7) for a turning insert (2) provided in an end portion of the tool body. The pocket (7) comprises a bottom support surface (8) and first and second pocket side surfaces (9, 10) defining a space for receiving the cutting insert therebetween. Each pocket side surface (9, 10) comprises two said stop surfaces of the insert seat, in the form of side support surfaces (11-14) provided on the pocket side surfaces and configured to receive associated contact surfaces provided on a circumferential side surface (6) of the cutting insert bearing against them, to provide a stop for said contact surfaces in a direction along a longitudinal extension of the insert seat and thereby to define a fixed position in the insert seat for the cutting insert in said direction.

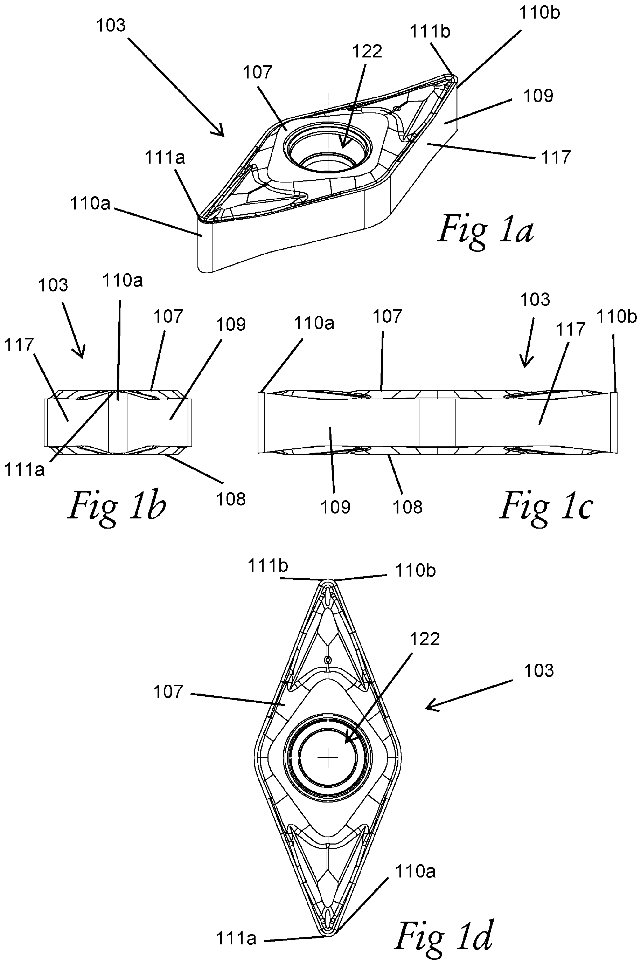

A conventional turning insert to be used with a tool of this type is also shown in Figs 1a-1d of the present application.

Although the above described turning tool is well-functioning, the inventors have found that this leaves a great room for improvement. One problem by such turning tools already known, for instance that disclosed in said document, and which are configured for use with cutting inserts of the type shown in Figs 1a-1d of the present application, is that the stop surfaces of the insert seat configured to cooperate with associated contact surfaces on the circumferential side surface of a cutting insert provide limited flexibility in the mutual design of these surfaces. The side surface of a cutting insert of this type generally consist of rather flat portions as the insert seat should be as form-fitting with respect to the cutting insert as possible to provide a slim turning tool which may be used for turning operations also in tight spaces.

Hence, protruding parts on the circumferential side surface of the cutting insert is generally avoided. Additionally, for such a cutting insert as shown in Figs 1a-1d of the present application, with two nose portions (i.e. an indexable cutting insert) it is almost impossible to provide the cutting insert with protruding contact surfaces on the circumferential side surface, and basically contact surfaces of any other design than flat surfaces forming part of the circumference of the cutting insert, in a top view, as the contact surfaces would then interfere with the cutting performance of the nose portion of the same side of the insert, as seen in a longitudinal direction. Therefore, the development within this field has historically mainly been focused on the number and design of stop surfaces on the side wall sections of the insert seat, to cooperate with flat circumferential portions of the side surface of the cutting insert.

The flexibility to design support surfaces in the insert seat and therewith associated contact surfaces on the cutting insert is for the reasons described limited. At the same time, the design and positioning of these surfaces may substantially affect the performance of the turning tool, for instance in aspects such as guiding of the cutting insert to a proper position in the insert seat and keeping this stable and with an effective load distribution in the cutting insert, insert seat and tool body during a cutting operation.

Accordingly, there has been a strive to develop a turning tool with improved guidance of the cutting insert and positioning thereof in the insert seat and in this regard especially improved location of the surface generating cutting edge on the cutting insert, improved stability of the cutting insert during a cutting operation performed by the turning tool and improved distribution of loads, from cutting forces applied to the cutting insert, in the different parts of the turning tool, with respect to turning tools of this type already known. Also, there has been a strive for enabling a greater flexibility in designing different models of turning tools of this type, with different characteristics regarding these aspects suitable for a specific intended use thereof.

To summarize, there is a constant strive for continuous improvement of products of this type and there is still much to do within the field, regarding the aspects mentioned above but also others, such as wear resistance and tool life, surface finish on the workpiece to be machined and economic and/or environmental aspects.

### SUMMARY OF THE INVENTION

An object of the present invention is to provide a turning tool of the type defined in the introduction, which turning tool is being improved in at least some aspect with respect to such turning tools already known, for instance in any of the aspects mentioned above.

This object is according to the invention obtained by providing a turning tool by which the first contact surface of the cutting insert is arranged at the top surface thereof and configured to extend away from adjacent parts of the top surface from a lower end to an upper end of the first contact surface in a plane which forms an angle with the first reference plane, wherein a distance between the lower end of the first contact surface and the first reference plane is smaller than a distance between the upper end of the first contact surface and the first reference plane, as measured in a direction in parallel with the center axis of the cutting insert, and
the first stop surface of the insert seat is arranged at, or at a stiff member rigidly connected with, an upper part of the first side wall section.

A turning tool with such a design provides many advantages with respect to such tools already known. More specifically, such a contact surface provided on the top surface of the cutting insert enables increased flexibility in designing the contact surface, as the top surface is not limited to a specific design in the same sense as the circumferential side surface. This means that such a contact surface may be provided with a specific shape, size and orientation suitable for the intended use of the turning tool, in aspects such as load distribution and stability in various directions. Furthermore, such a contact surface offers the possibility to adjust this by machining, for instance grinding, to obtain desired characteristics of the turning tool, such as an improved location of the surface generating cutting edge on the cutting insert. A further example is that the arrangement of such a contact surface on the top surface of the cutting insert results in an improved distribution of loads in various parts of the insert seat and the cutting insert, compared to if all corresponding contact surfaces are located on the circumferential side surface.

According to an embodiment of the invention the first stop surface of the insert seat is arranged to face in a direction away from the rear end of the insert seat and the first contact surface of the cutting insert is arranged to face in a direction away from the first nose portion of the cutting insert.

According to another embodiment of the invention the cutting insert further comprises a second, with respect to the first, opposite facing nose portion and a second cutting edge, wherein the second cutting edge is arranged at a transition between the top surface and the circumferential side surface at the second nose portion, and the cutting insert further comprises a second contact surface,
wherein the second contact surface of the cutting insert is arranged at the top surface thereof and configured to extend away from adjacent parts of the top surface from a lower end to an upper end of the second contact surface in a plane which forms an angle with the first reference plane, wherein a distance between the lower end of the second contact surface and the first reference plane is smaller than a distance between the upper end of the second contact surface and the first reference plane, as measured in a direction in parallel with the center axis of the cutting insert, and
the first and second contact surfaces are arranged on opposite sides of the third reference plane.

According to another embodiment of the invention the insert seat further comprises
- a second stop surface arranged at the second side wall section or at a stiff member rigidly connected therewith,
and the cutting insert further comprises a third contact surface associated with the second stop surface of the insert seat,
wherein the third contact surface of the cutting insert is arranged at the top surface thereof and configured to extend away from adjacent parts of the top surface from a lower end to an upper end of the third contact surface in a plane which forms an angle with the first reference plane, wherein a distance between the lower end of the third contact surface and the first reference plane is smaller than a distance between the upper end of the third contact surface and the first reference plane, as measured in a direction in parallel with the center axis of the cutting insert, and
the first and third contact surfaces are arranged on the same side of the third reference plane and on opposite sides of the second reference plane.

According to another embodiment of the invention the cutting insert further comprises a fourth contact surface associated with the first stop surface of the insert seat,
wherein the fourth contact surface of the cutting insert is arranged at the top surface thereof and configured to extend away from adjacent parts of the top surface from a lower end to an upper end of the fourth contact surface in a plane which forms an angle with the first reference plane, wherein a distance between the lower end of the fourth contact surface and the first reference plane is smaller than a distance between the upper end of the fourth contact surface and the first reference plane, as measured in a direction in parallel with the center axis of the cutting insert, and
the second and fourth contact surfaces are arranged on the same side of the third reference plane and on opposite sides of the second reference plane.

According to another embodiment of the invention the first and second stop surfaces each has a longitudinal extension, in a plane in parallel with a plane in which the bottom support surface extends, such that the distance between the first and second stop surfaces decreases in a direction towards the rear end of the insert seat, and the first and third contact surfaces each has a longitudinal extension, in a plane in parallel with the first reference plane, such that the distance between the first and third contact surfaces decreases in a direction away from the third reference plane.

According to another embodiment of the invention the first and second stop surfaces are arranged to form an angle between them of 30-150°, preferably 70-150°, most preferred 85-125°, and the first and third contact surfaces are arranged to form a corresponding angle between them, as measured within the cutting insert.

According to another embodiment of the invention the insert seat further comprises
- a stiff member configured to be rigidly connected, preferably formed in one piece, by a first end portion thereof to an upper part of the first side wall section and to protrude therefrom over said space towards an upper part of the opposite second side wall section, wherein the first stop surface of the insert seat is arranged at said stiff member.

According to another embodiment of the invention the stiff member is further configured to be rigidly connected, preferably formed in one piece, by a second end portion thereof to the upper part of the second side wall section so as to extend between and rigidly interconnect the upper parts of the first and second side wall sections over said space.

According to another embodiment of the invention the first stop surface of the insert seat is a machined, especially grinded, stop surface.

According to another embodiment of the invention the first and second stop surfaces of the insert seat are machined, especially grinded, stop surfaces.

According to another embodiment of the invention the first contact surface of the cutting insert is a machined, especially grinded, contact surface.

According to another embodiment of the invention the first and/or second, and/or third and/or fourth, preferably all, contact surfaces of the cutting insert are machined, especially grinded, contact surfaces.

According to another embodiment of the invention the first and second side wall sections extend divergently from each other in a direction away from a rear end of the insert seat along a longitudinal extension thereof, such that a width of the space defined between the first and second side wall sections increases in said direction.

According to another embodiment of the invention the turning tool further comprises a shim, and the bottom support surface of the insert seat is defined by a top surface of the shim.

According to another embodiment of the invention the first cutting edge of the cutting insert comprises a first convex nose cutting edge portion arranged at the first nose portion.

According to another embodiment of the invention the second cutting edge of the cutting insert comprises a second convex nose cutting edge portion arranged at the second nose portion.

According to another embodiment of the invention the first cutting edge further comprises a first leading cutting edge portion and a first trailing cutting edge portion, wherein the first convex nose cutting edge portion connects the first leading cutting edge portion and the first trailing cutting edge portion.

According to another embodiment of the invention the second cutting edge further comprises a second leading cutting edge portion and a second trailing cutting edge portion, wherein the second convex nose cutting edge portion connects the second leading cutting edge portion and the second trailing cutting edge portion.

According to another embodiment of the invention the bottom support surface of the insert seat has a symmetrical, or at least substantially symmetrical, preferably rhombic, shape.

According to another embodiment of the invention the bottom support surface of the insert seat is provided with a hole, especially a threaded hole, in the center thereof, and the cutting insert is provided with a through-hole extending between the top and bottom surfaces thereof, to enable attachement of the cutting insert by a fastening element, especially a screw, to the bottom support surface of the insert seat.

According to another embodiment of the invention each contact surface of the cutting insert has a larger width, measured as the distance between the lower and upper end thereof in a direction in parallel with the central axis of the cutting insert, at an outer end of the contact surface, adjacent to the transition between the top and circumferential side surface, than at an opposite inner end of the contact surface, such that each contact surface stepwise or continuously tapers in a direction from the outer end towards the inner end.

According to another embodiment of the invention the first stop surface of the insert seat is arranged at a distance to the rear end of the insert seat, wherein said distance is greater than 20%, preferably greater than 25%, more preferred greater than 30%, of the total length of the insert seat, as measured between the front and rear ends thereof.

According to another embodiment of the invention the stiff member is arranged between the center hole of the bottom support surface and a rear end of the insert seat such that the center hole is not covered by any part of the stiff member as seen in top view.

According to another embodiment of the invention the cutting insert has a symmetrical, or at least substantially symmetrical, preferably rhombic, shape, in top view.

According to another embodiment of the invention the first nose portion forms an acute nose angle of 15-85°, preferably 20-60°, more preferred 25-45°.

According to another embodiment of the invention the second nose portion forms an acute nose angle equal or at least substantially equal to the first nose angle.

The invention also relates to a cutting insert and a tool body according to the appended independent claims thereof. Realizations of, and advantages with, such a cutting insert and tool body clearly appears from the above and following description of embodiments of a turning tool according to the invention.

The invention also relates to a method for producing a turning tool comprising a tool body and a cutting insert, wherein the method comprises the steps of:
a) Providing a tool body having at one end thereof a coupling portion configured for attachment to a machine tool, and at another end thereof an insert seat configured to accommodate the cutting insert in a mounted state of the turning tool,
   wherein the insert seat comprises
   - a bottom support surface and first and second side wall sections extending along at least a part of the bottom support surface on opposite lateral sides thereof, wherein the bottom support surface and the first and second side wall sections together define a space for receiving at least a part of the cutting insert in said mounted state,
   - a first stop surface arranged at the first side wall section or at a stiff member rigidly connected therewith,
b) Providing a cutting insert comprising
   - a top surface,
   - an opposite bottom surface by which the cutting insert is configured to bear on the bottom support surface of the insert seat in said mounted position,
   - a circumferential side surface connecting the top surface and the bottom surface,
   - a first nose portion,
   - a first cutting edge arranged at a transition between the top surface and the circumferential side surface at the first nose portion,
   - at least one contact surface configured to provide a contact point for support of the cutting insert in said mounted position,
      wherein a first reference plane is located parallel to and between the top surface and the bottom surface, wherein a center axis of the cutting insert extends perpendicular to the first reference plane,
      wherein a second reference plane extends perpendicular to the first reference plane and through a center of the first nose portion and the center axis of the cutting insert, and
      wherein a third reference plane extends perpendicular to the first and second reference planes and through the center axis of the cutting insert,
c) Measuring and/or providing information of an actual spatial position for said first stop surface,
d) Providing information of a nominal position for at least one point along the first cutting edge of the cutting insert in a said mounted state,
e) Measuring and/or providing information of the position of the at least one contact surface in the insert seat,
f) Measuring a corresponding at least one contact surface on the cutting insert and a position of said at least one point along the first cutting edge in relation to at least one given reference point on the cutting insert,
g) Calculating, based on the information obtained from steps e) and f) and on the assumption that the cutting insert would be arranged in the insert seat with its said at least one contact surface in abutting contact with the corresponding at least one contact surface in the insert seat, a projected mounted position for the cutting insert and thereby a projected actual position for the at least one point along the first cutting edge of the cutting insert in the mounted state,
h) Calculating a spatial deviation between the nominal and projected actual position for said at least one point along the first cutting edge of the cutting insert,
i) Calculating, based on the information obtained from steps c) and h) and of said projected mounted position for the cutting insert, a nominal spatial position for a first, with the first stop surface of the insert seat associated, contact surface to be grinded on the cutting insert so as to compensate for said spatial deviation between the nominal and projected actual position for said at least one point along the first cutting edge of the cutting insert when the cutting insert is mounted in the insert seat and the first contact surface on the cutting insert abuttingly contacts the first stop surface of the insert seat,
j) Grinding, based on the information obtained from step i), such a first contact surface on the cutting insert.

According to an embodiment of the invention related to the method for producing a turning tool the insert seat of the tool body provided in step a) comprises:
- a first stop surface arranged at an upper part of the first side wall section or at a stiff member rigidly connected with said upper part, and
step j) more specifically comprises:
Grinding, based on the information obtained from step i), such a first contact surface on the top surface of the cutting insert.

According to another embodiment of the invention related to the method for producing a turning tool step a) comprises providing a said tool body with a said insert seat which further comprises:
- a stiff member configured to be rigidly connected, preferably formed in one piece, by a first end portion thereof to an upper part of the first side wall section and to protrude therefrom over said space towards an upper part of the opposite second side wall section,
   wherein the first stop surface is arranged at the stiff member.

According to another embodiment of the invention related to the method for producing a turning tool step a) comprises providing a said tool body with a said insert seat comprising a said stiff member which is further configured to be rigidly connected, preferably formed in one piece, by a second end portion thereof to the upper part of the second side wall section so as to extend between and rigidly interconnect the upper parts of the first and second side wall sections over said space.

According to another embodiment of the invention related to the method for producing a turning tool step c) further comprises, before measuring and/or providing information of an actual spatial position for said first stop surface, grinding said first stop surface to produce a first grinded stop surface in the insert seat.

The invention also relates to a method for producing a cutting insert intended to be arranged at a tool to be used for turning, wherein the method comprises the steps of:
a') Providing a cutting insert comprising
   - a top surface,
   - an opposite bottom surface,
   - a circumferential side surface connecting the top surface and the bottom surface,
   - a first nose portion, and
   - a first cutting edge arranged at a transition between the top surface and the circumferential side surface at the first nose portion,

   wherein a first reference plane is located parallel to and between the top surface and the bottom surface,
   wherein a center axis of the cutting insert extends perpendicular to the first reference plane,
   wherein a second reference plane extends perpendicular to the first reference plane and through a center of the first nose portion and the center axis of the cutting insert, and
   wherein a third reference plane extends perpendicular to the first and second reference planes and through the center axis of the cutting insert,
b') Providing information of a nominal position for at least one point along the first cutting edge in relation to at least one given reference point on the cutting insert, and of a nominal spatial position for a first contact surface configured to provide a contact point for support of the cutting insert upon arrangement of the cutting insert at a said turning tool, wherein the nominal spatial position for the first contact surface is a desired spatial position for this surface in relation to the at least one point along the first cutting edge in a modeled environment,
c') Measuring an actual position of said at least one point along the first cutting edge in relation to the at least one given reference point on the cutting insert,
d') Calculating a spatial deviation between the nominal and actual position for said at least one point along the first cutting edge of the cutting insert,
e') Calculating, based on the information obtained from step d'), an adjustment to be made to the nominal spatial position of the first contact surface to compensate for said spatial deviation between the nominal and actual position for said at least one point along the first cutting edge of the cutting insert,
f') Grinding, based on the information obtained from step e'), an adjusted first contact surface on the cutting insert.

According to an embodiment of the invention related to the method for producing a cutting insert the nominal spatial position for the first contact surface is located on the top surface of the cutting insert, and
step f') more specifically comprises:
Grinding, based on the information obtained from step e'), the adjusted first contact surface on the top surface of the cutting insert.

According to another embodiment of the invention related to the method for producing a cutting insert the nominal spatial position for the first contact surface comprises an extension thereof in a plane which forms an angle of 90° or at least substantially 90° with the first reference plane and which forms an angle greater than 0° with the third reference plane, and
step e') of calculating an adjustment to be made to the nominal spatial position of the first contact surface comprises calculating an adjustment to be made to the extension of the first contact surface in relation to the third reference plane so as to amend the angle which the first contact surface forms with the third reference plane.

Realizations of, and advantages with, the methods for producing a turning tool and a cutting insert according to the invention clearly appears from the above and following description of embodiments of a turning tool, a cutting insert and a tool body according to the invention.

Further advantages and advantageous features of the invention will appear from the following detailed description of embodiments thereof.

### DESCRIPTION OF THE DRAWINGS

With reference to the appended drawings, below follows a specific description of embodiments of the invention cited as examples.
- Fig. 1a: is a view obliquely from above of a conventional type cutting insert for turning,
- Fig. 1b: is a front view of the cutting insert of Fig. 1a,
- Fig. 1c: is a lateral view of the cutting insert of Fig. 1a,
- Fig. 1d: is a top view of the cutting insert of Fig. 1a,
- Fig. 2a: is a view obliquely from above of a cutting insert for a turning tool according to a first embodiment of the invention,
- Fig. 2b: is a front view of the cutting insert of Fig. 2a,
- Fig. 2c: is a lateral view of the cutting insert of Fig. 2a,
- Fig. 2d: is a top view of the cutting insert of Fig. 2a,
- Fig. 3: is a view obliquely from above from a front side of a turning tool according to an embodiment of the invention, including the cutting insert of Fig. 2a,
- Fig. 4: is a view corresponding to Fig. 3 showing the tool body of the turning tool without cutting insert,
- Fig. 5: is a view obliquely from below from a front side of the tool body of Fig. 4,
- Fig. 6: is a top view of the turning tool of Fig. 3,
- Fig. 7: is a sectional lateral view through the turning tool and cutting insert of Fig. 3 as seen in the section indicated "VII" in Fig. 6,
- Fig. 8: is a lateral view of the turning tool of Fig. 3,
- Fig. 8a: is a sectional top view of the turning tool and cutting insert of Fig. 3 as seen in the section indicated "Villa" in Fig. 8,

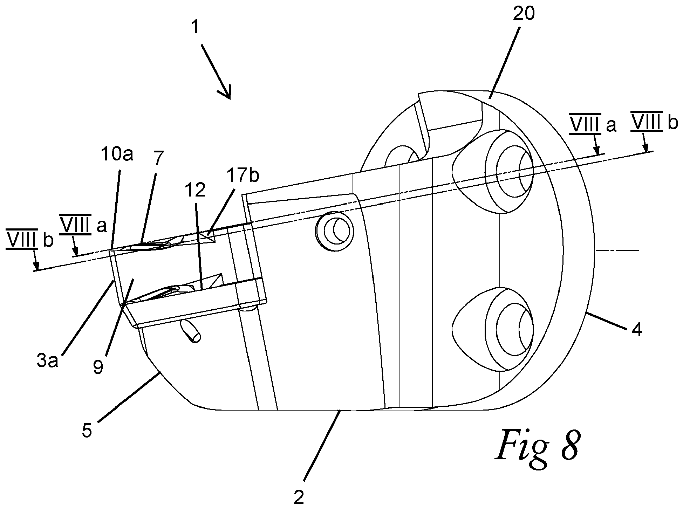

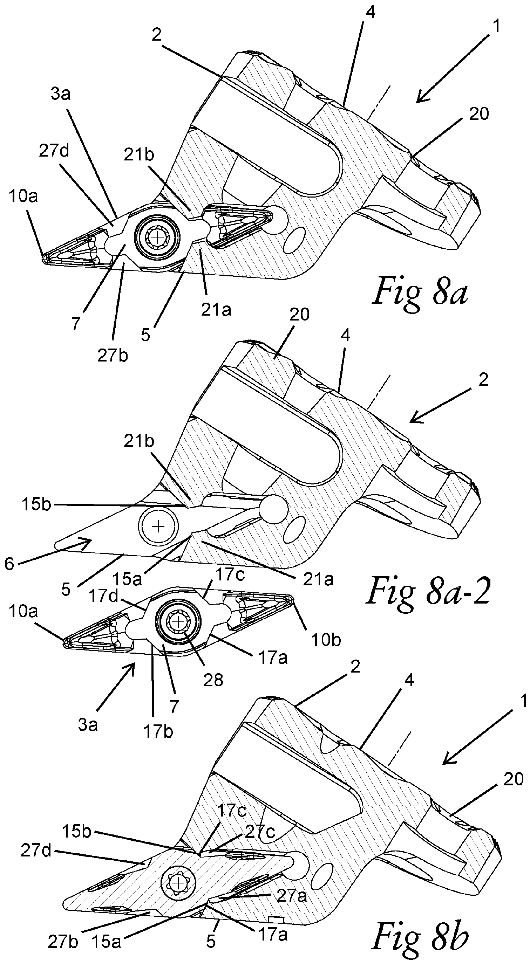

- Fig. 8a-2: is a sectional top view corresponding to Fig. 8a but with the cutting insert pulled out of the insert seat of the turning tool,

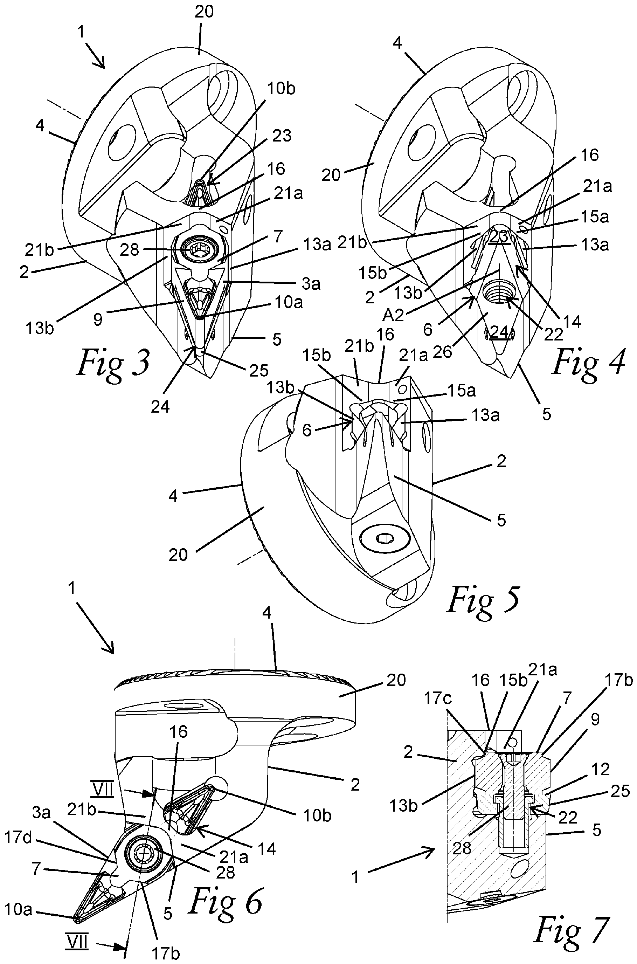

- Fig. 8b: is a sectional top view of the turning tool and cutting insert of Fig. 3 as seen in the section indicated "Vlllb" in Fig. 8,

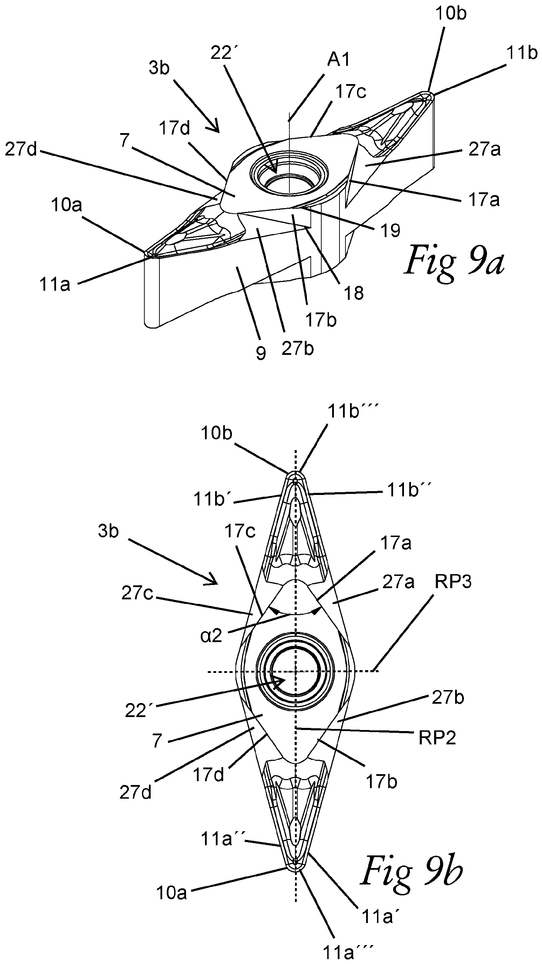

- Fig. 9a: is a view obliquely from above of a cutting insert for a turning tool according to a second embodiment of the invention,
- Fig. 9b: is a top view of the cutting insert of Fig. 9a,

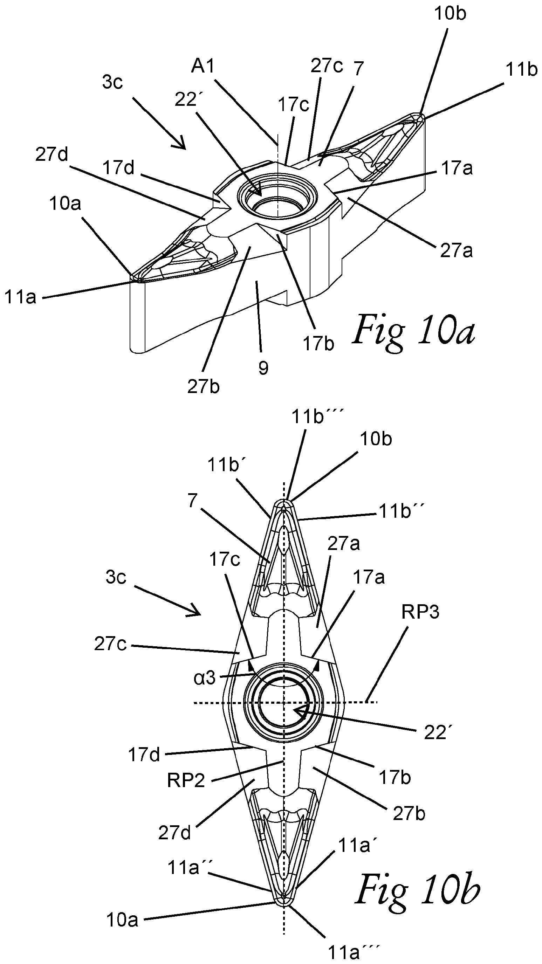

- Fig. 10a: is a view obliquely from above of a cutting insert for a turning tool according to a third embodiment of the invention,
- Fig. 10b: is a top view of the cutting insert of Fig. 10a,

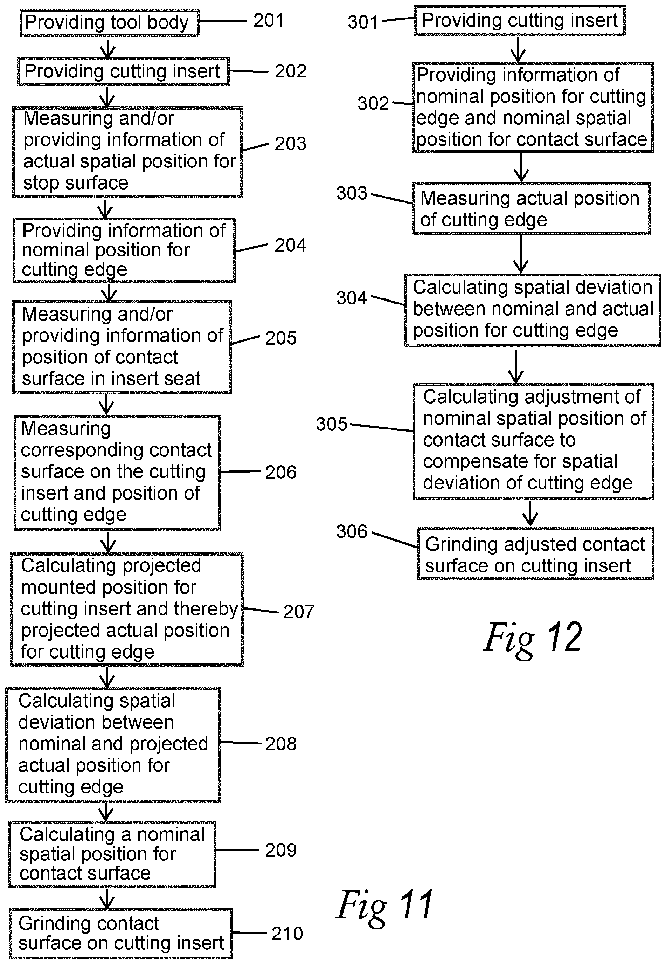

- Fig. 11: is a flowchart illustrating a method for producing a turning tool according to an embodiment of the invention, and
- Fig. 12: is a flowchart illustrating a method for producing a cutting insert according to an embodiment of the invention.

### DETAILED DESCRIPTION OF EMBODIMENTS OF THE INVENTION

Fig 1 shows a conventional type cutting insert 103 intended to be arranged at a turning tool, i.e. a conventional turning insert. The cutting insert 103 comprises a top surface 107, an opposite bottom surface 108 by which the cutting insert is configured to bear on a bottom support surface of an insert seat of the turning tool in a state of use, i.e. in a mounted state of the turning tool in which this may be used for a turning operation, and a circumferential side surface 109 connecting the top surface 107 and the bottom surface 108 around the entire circumference of the cutting insert 103. The cutting insert further comprises two nose portions 110a, 110b each provided with a nose cutting edge 111a, 111b arranged at a transition between the top surface 107 and the circumferential side surface 109 at the respective nose portion.

As already mentioned in the introduction, the contact surfaces 117 of this cutting insert 103, configured to be positioned in abutment with associated stop surfaces arranged on side walls in the insert seat, are formed by portions of the circumferential side surface 109. Hence, in addition to a fastening screw securing the cutting insert 103 in the insert seat, through a center hole 122 of the cutting insert, the cutting insert is supported by said stop surfaces on the circumferential side surface 109 during use.

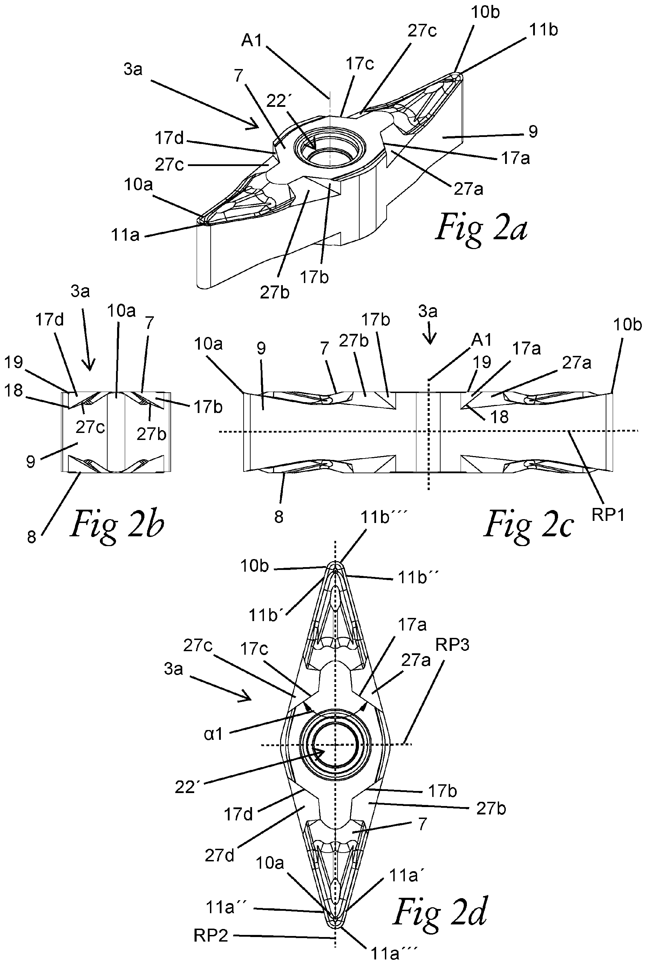

A turning tool 1 according to an embodiment of the invention, and components thereof, is shown in Figs 2a-8b. Figs 2a-2d show a cutting insert 3a according to a first embodiment of the invention, which is adapted for the tool body 2 of the cutting tool 1 shown. The tool body 2 according to an embodiment of the invention is shown by itself in Figs 4 and 5. Figs 9a-9b and 10a-10b show a cutting insert 3b, 3c according to a second and third embodiment of the invention, respectively. These may also be included in a cutting tool 1 according to the invention, with slight design changes of the tool body 2 thereof, which will be clear from the description below.

It is to be stated that the effect of the inventive features are the same or at least substantially the same for all of the cutting inserts 3a-3c shown, which is why the same or corresponding features need not be described in detail for each of these embodiments, but the parts described for one of the cutting inserts, i.e. one of the three embodiments, and indicated with corresponding reference numerals on the other cutting inserts, have the same or a corresponding function and effect also for the other cutting inserts, i.e. other embodiments shown, if not otherwise stated.

The turning tool 1, cutting insert 3a-3c and tool body 2 according to the invention will now be described while at the same time making reference to all these drawings.

The turning tool 1 according to the invention comprises a tool body 2 and a cutting insert 3a-3c. The tool body has at one end 4 thereof a coupling portion 20 configured for attachment to a machine tool, such as a CNC-machine, and at another end 5 thereof an insert seat 6. The insert seat is arranged in the tool body and configured to accommodate the cutting insert 3a-3c in a state of use of the turning tool 1, i.e. in a state in which the cutting insert is mounted in the tool body and the turning tool 1 may be used for a turning operation. It should be made clear that the fact that the tool body has two said ends do not in any way define a specific design thereof, but the invention may be applied to a turning tool 1 with a large number of differently shaped tool bodies 2, such as having elongated, short, straight or curved shapes, and it may also be provided with more than two ends.

The insert seat 6 comprises a bottom support surface 12 and first 13a and second 13b side wall sections extending along at least a part, in the embodiment shown about half, of the bottom support surface on opposite lateral sides thereof. The bottom support surface 12 and the first 13a and second 13b side wall sections thus together define a pocket-like space 14 for receiving at least a part of the cutting insert 3a-3c in said state of use. The first and second side wall sections are arranged to extend divergently from each other in a direction away from a rear end 23 of the insert seat 6 along a longitudinal extension and towards a front end 24 thereof, such that a width of the space 14 defined between the first and second side wall sections increases in said direction. The bottom support surface 12 of the insert seat 6 has a symmetrical, or at least substantially symmetrical, rhombic shape.

The rear end 23 of the insert seat 6 is to be understood as the end thereof opposite to the front end 24, wherein the front end accommodates the nose portion 10a of the cutting insert with the active cutting edge 11a, or a part of the cutting insert in proximity of the first nose portion, in said state of use, i.e. the front end being the end configured to face a workpiece to be machined by the turning tool 1 during use thereof.

In the embodiment shown the turning tool 1 further comprises a shim 25, configured to be arranged between the cutting insert 3a-3c and the tool body 2 in the state of use, for stabilizing the cutting insert and protecting the tool body. In such a case the bottom support surface 12 of the insert seat is considered to be defined by a top surface of the shim 25. However, the bottom support surface 12 of the insert seat could also be defined by a permanent bottom surface 26 of the tool body 2 (on which the shim 25 is configured to be mounted if present) in the case no shim is used.

The cutting insert 3a-3c is a fine precision cutting insert, or profiling insert, which comprises a top surface 7, an opposite bottom surface 8 by which the cutting insert is configured to bear on the bottom support surface 12 of the insert seat 6 in said state of use, and a circumferential side surface 9 connecting the top surface and the bottom surface. It should be made clear that all of these surfaces do not have to be formed by one and the same coherent surface with a single orientation, but each of these could be formed by an arbitrary number of subsurfaces, extending with different angles with respect to a given reference, which together constitute and define an extension of the respective surface. The top surface 7 is considered as the surface on the side of the cutting insert 3a-3c seen in a top view (see Figs 2d, 9b and 10b) and facing away from the bottom support surface 12 when the cutting insert is mounted in the insert seat. The bottom surface 8 is in the same way considered as the surface on the side of the cutting insert 3a-3c seen in a bottom view (not shown), facing the bottom support surface in the mounted position.

In the embodiments of the cutting insert 3a-3c shown the top and bottom surfaces are the same enabling turning of the cutting insert upside-down (when the cutting edge/s of the top surface is/are worn down) so that the cutting insert is mounted with the bottom surface as top surface, and the other way around, for using cutting edges on both the top and bottom surfaces of the cutting insert before this is discarded. It is however also possible that a cutting insert 3a-3c according to the invention has top 7 and bottom 8 surfaces with completely different designs. The circumferential side surface 9 connects the top 7 and bottom 8 surfaces and extends around the entire cutting insert 3a-3c so as to form a lateral mantle surface thereof.

The cutting insert 3a-3c further comprises a first nose portion 10a and a second opposite nose portion 10b. More specifically, the cutting insert has a symmetrical, rhombic shape (in top view) with two acute nose portions pointing away from each other. The first nose portion 10a is provided with a first cutting edge 11a arranged at a transition between the top surface 7 and the circumferential side surface 9 at the first nose portion. The first cutting edge 11a includes a straight or substantially straight first leading cutting edge portion 11a' arranged on one side of the first nose portion, a straight or substantially straight first trailing cutting edge portion 11 a" arranged on the other side of the first nose portion, and a first convex nose cutting edge portion 11a‴ arranged at the tip of the first nose portion and connecting the first leading and trailing cutting edge portions.

In a corresponding way, the second nose portion 10b is provided with a second cutting edge 11b arranged at a transition between the top surface 7 and the circumferential side surface 9 at the second nose portion. The second cutting edge 11b includes a straight or substantially straight second leading cutting edge portion 11b' arranged on one side of the second nose portion, a straight or substantially straight second trailing cutting edge portion 11b" arranged on the other side of the second nose portion, and a second convex nose cutting edge portion 11b‴ arranged at the tip of the second nose portion and connecting the second leading and trailing cutting edge portions. However, the first 11a and/or second 11b cutting edges may be constituted by only one or two of these cutting edge portions, such as having one straight leading cutting edge portion or a convex nose cutting edge portion only.

The first 10a and second 10b nose portions each form an acute nose angle of 15-85°, preferably 20-60°, more preferred 25-45°, measured as the angle between the longitudinal extensions of the lateral edges of the top portion 7 adjacent to the tip of the respective nose portion, on opposite sides thereof, as seen in top view and measured within the cutting insert. In the embodiments shown, these angles are measured between the leading 11b' and trailing 11b" cutting edge portions at the respective nose portion.

A first reference plane RP1 of the cutting insert 3a-3c is located parallel to and between the top surface 7 and the bottom surface 8 (see Fig 2c). A center axis A1 of the cutting insert 3a-3c extends perpendicular to the first reference plane RP1 (see Figs 2a, 2c, 9a and 10a). A second reference plane RP2 of the cutting insert 3a-3c extends perpendicular to the first reference plane RP1 and through a center of the first and second nose portions 10a, 10b and the center axis A1 of the cutting insert 3a-3c (see Figs 2d, 9b and 10b). A third reference plane RP3 of the cutting insert 3a-3c extends perpendicular to the first RP1 and second RP2 reference planes and through the center axis A1 of the cutting insert 3a-3c (see Figs 2d, 9b and 10b).

The insert seat 6 of the tool body 2 of the turning tool 1 further comprises a stiff member 16 configured to be rigidly connected by a first end portion 21a thereof to an upper part of the first side wall section 13a and to protrude therefrom over said space 14 towards an upper part of the opposite second side wall section 13b. The stiff member 16 is further configured to be rigidly connected by a second end portion 21b thereof to the upper part of the second side wall section 13b so as to extend between and rigidly interconnect the upper parts of the first and second side wall sections at a distance to the bottom support surface 12 over said space 14. Preferably the stiff member 16 is formed in one piece with the first 13a and second 13b side wall sections, at the upper parts thereof, as is the case in the embodiment of the turning tool 1 shown.

A said upper part is to be considered as constituting at most 30%, preferably at most 25%, even more preferred at most 20%, of a height of the respective side wall section measured between an upper end thereof and a position therealong located in a plane in which the bottom support surface extends and from said upper end downwards.

The insert seat 6 further comprises a first stop surface 15a and a second stop surface 15b arranged at the stiff member 16 on opposite sides of a center thereof located midway between the first and second side wall sections. More specifically, the first stop surface 15a is arranged at a portion of the stiff member 16 connected and adjacent to the first side wall section 13a and the second stop surface 15b is arranged at a portion of the stiff member 16 connected and adjacent to the second side wall section 13b, both on a front side of the stiff member such that each stop surface 15a, 15b is arranged to face in a direction away from the rear end 23 and towards the front end 24 of the insert seat 6.

The cutting insert 3a-3c further comprises a first contact surface 17a associated with the first stop surface 15a of the insert seat 6 and a third contact surface 17c associated with the second stop surface 15b of the insert seat. The first 17a and third 17c contact surfaces are arranged at the top surface 7 of the cutting insert and configured to extend away from adjacent parts of the top surface from a lower end 18a to an upper end 19a of each contact surface 17a, 17c in a plane which forms an angle with the first reference plane RP1, wherein a distance between the lower end 18a of each contact surface 17a, 17c and the first reference plane RP1 is smaller than a distance between the upper end 19a of each contact surface 17a, 17c and the first reference plane RP1, as measured in a direction in parallel with the center axis A1 of the cutting insert 3a-3c. The first 17a and third 17c contact surfaces are arranged on the same side of the third reference plane RP3 and on opposite sides of the second reference plane RP2. The first 17a and third 17c contact surfaces are further arranged on the opposite side of the third reference plane RP3 with respect to the first nose portion 10a and to face in a direction away from the first nose portion 10a. Accordingly, the first 17a and third 17c contact surfaces are arranged as a pair of contact surfaces on the top surface 7 of the cutting insert 3a-3c, each on its own side of a longitudinal center line (extending in the second reference plane RP2) of the cutting insert and on the opposite side of a center line across the cutting insert (extending in the third reference plane RP3), perpendicular to the longitudinal center line, with respect to the first nose portion, i.e. on the other half of the cutting insert with respect to the first nose portion 10a and facing away from it.

The first 15a and second 15b stop surfaces of the insert seat 6 are associated with the first 17a and third 17c contact surfaces of the cutting insert 3a-3c, and the other way around, such that the first 15a and second 15b stop surfaces are configured to receive the first 17a and third 17c contact surfaces, respectively, bearing against them, to provide a stop for these contact surfaces in a direction along a longitudinal extension of the insert seat 6, measured centrally between the front 24 and the rear end 23 thereof, and thereby to define a fixed position in the insert seat for the cutting insert in said direction, in a state of use of the turning tool 1, in which the cutting insert 3a-3c is mounted in the insert seat 6. For obtaining said fixed position the cutting insert is inserted in the insert seat 6, from the front end 24 thereof, and slid along the bottom support surface 12 towards the rear end 23 of the insert seat until the first 17a and third 17c contact surfaces come into contact and being stopped by the stop surfaces 15a, 15b of the insert seat.

The first 15a and second 15b stop surfaces each has a longitudinal extension, in a plane in parallel with a plane in which the bottom support surface 12 extends, such that the distance between the first 15a and second 15b stop surfaces decreases in a direction towards the rear end 23 of the insert seat 6. In other words, the first 15a and second 15b stop surfaces converge in a direction towards the rear end 23 of the insert seat. More specifically, the first 15a and second 15b stop surfaces are arranged to form an angle between them of 30-150°, preferably 70-150°, most preferred 85-125°, as measured from the stop surfaces towards the front end 24 of the insert seat 6.

The associated first 17a and third 17c contact surfaces of the cutting insert 3a-3c are provided with a corresponding configuration, by each having a longitudinal extension, in a plane in parallel with the first reference plane RP1, such that the distance between the first 17a and third 17c contact surfaces decreases in a direction away from the third reference plane RP3. More specifically, the first 17a and third 17c contact surfaces are arranged to converge in a direction away from the first nose portion 10a and towards the second nose portion 10b so as to form a corresponding angle α1-α3 between them, as measured within the cutting insert 3a-3c. This means that if the angle between the stop surfaces 15a, 15b of the insert seat 6 is 110° (as is the case in the embodiment of the tool body 2 shown) the angle α1 between the first and third contact surfaces 17a, 17c of the cutting insert 3a are also 110° (first embodiment of the cutting insert, see Fig 2d), so that the contact surfaces fit tight against the stop surfaces in the state of use of the turning tool 1.

The cutting inserts 3b, 3c according to the second and third embodiments shown have angles α2, α3 of 70° and 150°, respectively, between the first 17a and third 17c contact surfaces. In this way, the support for the cutting insert 3a-3c in the insert seat 6 by the stop surfaces 15a, 15b may be adjusted to suit the specific intended use of the turning tool 1, such as to increase the ability to hold the cutting insert steady under heavy impacts from the front or lateral sides.

One advantage with two contact surfaces 17a, 17c of the cutting insert 3a-3c, on opposite sides of a longitudinal center thereof, and two corresponding stop surfaces 15a-15b in the insert seat 6 is a good localization of and support to the cutting insert in the insert seat. Such surfaces 17a-d, 15a-b arranged with mutual angles as described above provide further support from the lateral sides of the cutting insert. The cutting insert could however be provided with only one said contact surface 17a-17d, at a longitudinal center of the cutting insert or at one side thereof, and the insert seat 6 with a corresponding stop surface 15a-b. In such a case, the insert seat is preferably provided with at least two additional clearance side contact points, to provide support for the cutting insert through at least three contact points. Furthermore, a "pair" of contact surfaces on the cutting insert 3a-3c, such as the first 17a and third 17c contact surfaces and/or the second 17b and fourth 17d contact surfaces thereof, may be constituted by different surface portions of one and the same coherent surface, such as portions of opposite lateral sides of an arc-shaped contact surface. Also, the design and arrangement of the stiff member 16 not only stabilize the entire insert seat 6 but also enable advantageous positioning of the stop surfaces 15a-15b of the insert seat, such that these may effectively cooperate with associated contact surfaces 17a-17d of the cutting insert 3a-3c and create a favourable load distribution in and around the insert seat 6.

The cutting insert 3a-3c further comprises a second contact surface 17b associated with the second stop surface 15b of the insert seat 6 and a fourth contact surface 17d associated with the first stop surface 15a of the insert seat. The second 17b and fourth 17d contact surfaces correspond to the third 17c and first 17a contact surfaces, respectively, however arranged on the other side of the third reference plane RP3 to face away from the second nose portion 10b of the cutting insert 3a-3c. More specifically, the second 17b and fourth 17d contact surfaces are arranged on the same side of the third reference plane RP3, but on the opposite side of this plane with respect to the first 17a and third 17c contact surfaces. Moreover, the second 17b and fourth 17d contact surfaces are arranged on opposite sides of the second reference plane RP2 with respect to each other, while the second contact surface 17b is arranged on the same side of the second reference plane RP2 as the first contact surface 17a and the fourth contact surface 17d is arranged on the same side of this plane as the third contact surface 17c.

This configuration makes the cutting insert 3a-3c indexable 180° around the center axis A1 such that the first 17a and third 17c contact surfaces are supported by the stop surfaces 15a, 15b of the insert seat 6 in a state of use in which the first nose portion 10a is active, i.e. in a position for cutting in a workpiece, and the opposite second nose portion 10b is located at the rear end 23 in the insert seat 6, and the second 17b and fourth 17d contact surfaces are supported by the stop surfaces 15a, 15b of the insert seat 6 in a state of use in which the second nose portion 10b is active, i.e. in a position for cutting in a workpiece, and the first nose portion 10a is located at the rear end 23 in the insert seat 6.

Each contact surface 17a-17d of the cutting insert 3a-3c has a larger width, measured as the distance between the lower 18 and upper 19 end thereof in a direction in parallel with the central axis A1 of the cutting insert, at an outer end of the contact surface, adjacent to the transition between the top 7 and circumferential side 9 surface of the cutting insert, than at an opposite inner end of the contact surface, such that each contact surface 17a-17d continuously tapers in a direction from the outer end towards the inner end. This design of the contact surfaces results in an increased support for the cutting insert 3a-3c by the stop surfaces 15a, 15b of the insert seat 6 at lateral portions of the cutting insert, where the need for support generally is greatest.

The first 15a and second 15b stop surfaces may optionally be grinded surfaces, so as to facilitate abutting contact with the first 17a and third 17c, and second 17b and fourth 17d, contact surfaces with appropriate tolerances. Furthermore, grinded stop surfaces in the insert seat enable more precise adjustments in specific characteristics of the turning tool 1, such as fine tuning of the position for the active, surface generating cutting edge 11a, 11b of the cutting insert 3a-3c, by grinding the contact surfaces 17a-17d thereof.

The first 17a, second 17b, third 17c and fourth 17d contact surfaces of the cutting insert 3a-3c each extends in a plane which forms an angle of 90° or at least substantially 90° with the first reference plane RP1, which means that the contact surfaces each has an extension perpendicular or at least substantially perpendicular to the main extension of the top surface 7.

The cutting insert 3a-3c further comprises a first clearance surface 27a adjacent to the first contact surface 17a, a second clearance surface 27b adjacent to the second contact surface 17b, a third clearance surface 27c adjacent to the third contact surface 17c and a fourth clearance surface 27d adjacent to the fourth contact surface 17d. Each clearance surface 27a-27d is arranged to extend away from the lower end 18 of the respective contact surface 17a-17d, along the entire length thereof, to the transition between the top surface 7 and the circumferential side surface 9 of the cutting insert 3a-3c so as to provide a flat surface directly in front of the contact surface. Furthermore, each clearance surface 27a-d is arranged so as to form an angle of more than 90°, preferably at least 95°, more preferred at least 100° with the associated contact surface 17a-17d (which can be seen in Fig 2) so as to clear the way for the entire contact surface to come into contact with the associated stop surface 15a, 15b of the insert seat 6 while avoiding that any part of the cutting insert 3a-3c bump into the stiff member 16 when mounting the cutting insert in the insert seat.

The bottom support surface 12 of the insert seat 6 is provided with a hole 22 in the center thereof, and the cutting insert 3a-3c is provided with a corresponding through-hole 22' extending between the top 7 and bottom 8 surfaces thereof, to enable attachement of the cutting insert by a fastening element, especially a screw 28, to the bottom support surface of the insert seat. The hole 22 in the bottom support surface is preferably a threaded hole. However, in the presence of a shim 25, as in the embodiment shown, the shim may be provided with a blank through-hole which continues into the surface 26 of the tool body 2 located underneath the shim, in the state of use, and the threads may be arranged in that continuing portion of the hole 22.

The stiff member 16 is arranged between the center hole 22 of the bottom support surface 12 and the rear end 23 of the insert seat 6 such that the center hole is not covered by any part of the stiff member as seen in top view, to facilitate easy attachment and removal of the cutting insert 3a-3c to and from the insert seat 6 by the screw 28. At the same time, the stiff member 16 and especially the first 15a and second 15b stop surfaces arranged thereon should be arranged at a distance to the rear end 23 of the insert seat greater than 20%, preferably greater than 25%, more preferred greater than 30%, of the total length of the insert seat, as measured between the front 24 and rear 23 ends thereof. This to ensure a sufficient support from the stop surfaces 15a, 15b to the contact surfaces 17a-17d of the cutting insert 3a-3c and thereby that the cutting insert is held stable in the insert seat 6 in the state of use.

A nose portion 10a, 10b is a peripheral portion of the cutting insert 3a-3c where, in the embodiments shown, a rake face is formed on the top surface between in each case a leading, a trailing and a nose cutting edge. The nose cutting edge has the shape of an arc or a portion of a circle having its center between the first and second cutting edge, wherein the circle preferably has a radius of 0.2-2.0 mm. In other words, the nose cutting edge is preferably a convex cutting edge having a radius of curvature of 0.2-2.0 mm. The nose cutting edge may have a shape that deviates slightly from a perfect circular arc. A top view is a view in which the top surface is facing the viewer and the bottom surface is facing away from the viewer. The leading and trailing cutting edges are preferably straight in a top view. The two nose portions are opposite each other, i.e. each nose portion forms an angle of 180° around the center axis in relation to the other nose portion.

Now, a method for producing a turning tool 1 according to the invention and a method for producing a cutting insert 3a-3c according to the invention are to be described. The steps of these methods are illustrated in the flowcharts of Fig. 11 and 12, respectively.

The method for producing a turning tool 1, comprising a tool body 2 and a cutting insert 3a-3c, comprises the following steps 201-210 (Fig. 11).

Firstly, providing 201 a tool body 2 having at one end 4 thereof a coupling portion 20 configured for attachment to a machine tool, and at another end 5 thereof an insert seat 6 configured to accommodate the cutting insert 3a-3c in a mounted state of the turning tool 1. The insert seat of the tool body comprises a bottom support surface 12 and first 13a and second 13b side wall sections extending along at least a part of the bottom support surface 12 on opposite lateral sides thereof such that the bottom support surface and the first 13a and second 13b side wall sections together define a space 14 for receiving at least a part of the cutting insert 3a-3c in said mounted state. The insert seat 6 further comprises at least one contact surface configured to provide a contact point for support of the cutting insert in said mounted position, i.e. a surface intended to come into contact with a corresponding surface of the insert seat 6 so as to establish support for the cutting insert by the insert seat in one contact point. Said at least one contact surface is typically constituted by a portion of one of the first 13a and second 13b side wall sections, as is also described in the introduction.

The tool body 2 further comprises a stiff member 16 configured to be rigidly connected by a first end portion 21a thereof to an upper part of the first side wall section 13a and to be rigidly connected by a second end portion 21b thereof to the upper part of the second side wall section 13b so as to extend between and rigidly interconnect the upper parts of the first 13a and second 13b side wall sections over said space 14. Preferably, the stiff member 16 is formed in one piece with the first and second side wall sections, at the upper parts thereof. A tool body 2 to be provided according to one embodiment is shown in Figs 4-5.

Then, providing 202 a cutting insert 3a-3c, 103 which comprises a top surface 7, 107, an opposite bottom surface 8, 108 by which the cutting insert is configured to bear on the bottom support surface 12 of the insert seat 6 in said mounted state, and a circumferential side surface 9, 109 connecting the top surface and the bottom surface. The cutting insert comprises a first 10a, 110a and optionally also an opposite second 11b, 111b nose portion provided with a first 11a, 111a and second 11b, 111b cutting edge, respectively, in the same manner as is already described for the cutting insert 3a-3c according to the invention above. A cutting insert 103 to be provided according to one embodiment is shown in Fig 1a-1d, which in fact show the cutting insert 3a-3c as shown in any of the Figs 2a-2d, 9a-9b or 10a-10b before grinding the contact 17a-17d and clearance 27a-27d surfaces thereof. Hence, the cutting insert 3a-3c, 103 to be provided has / may be defined in relation to the same first RP1, second RP2 and third RP3 reference planes as well as the center axis A1 as described for the cutting inserts 3a-3c according to the invention, although not shown in Figs 1a-1d.

In a next step, the stop surfaces 15a, 15b of the insert seat 6 are measured 203 to obtain information of an actual spatial position for each stop surface 15a, 15b, or this information provided by for instance a model from the manufacturing of the tool body, or, if the stop surfaces have been machined, such as grinded, the information may be provided from the grinding operation. The actual spatial position for a stop surface refers to the actual position and extension thereof in at least a two-dimensional plane, extending in parallel with the first reference plane RP1, in relation to a given reference on the tool body, such as a central axis A2 of a center hole 22 in the bottom support surface 12 or a point on an edge of the front end 24 of the insert seat 6.

Information of a nominal, i.e. desired, position for at least one point along the first cutting edge 11a of the cutting insert 3a-3c in a said mounted state is provided 204. This information basically says where the first cutting edge, or the at least one point thereof, should be located, in said two-dimensional plane, during a cutting operation with the turning tool 1. Information of the position of the at least one contact surface in the insert seat 6 is also provided 205, or the at least one contact surface in the insert seat measured to obtain this information.

Furthermore, a corresponding at least one contact surface is measured 206 on the cutting insert 3a-3c, which is typically a portion of the circumferential side surface 9 which will be brought into contact with the at least one contact surface of the insert seat 6 when the cutting insert is inserted therein. Also, a position of said at least one point along the first cutting edge 11a in relation to at least one given reference point, for instance the central axis A1, on the cutting insert 3a-3c is measured 206.

The next step is calculating 207, based on the information of the position of the at least one contact surface in the insert seat 6, the at least one contact surface on the cutting insert 3a-3c and of said at least one point along the first cutting edge 11a in relation to at least one given reference point A1 on the cutting insert, and on the assumption that the cutting insert 3a-3c would be arranged in the insert seat 6 with its said at least one contact surface in abutting contact with the corresponding at least one contact surface in the insert seat 6, a projected mounted position for the cutting insert 3a-3c and thereby a projected actual position for the at least one point along the first cutting edge 11a of the cutting insert 3a-3c in the mounted state. The answer searched for in this calculating process is accordingly where the at least one point along the cutting edge would be positioned without any adjustment of the cutting insert, i.e. if this would simply be mounted in the insert seat as it is.

Based on this information it is then calculated 208 a spatial deviation between the nominal and projected actual position for said at least one point along the first cutting edge 11a of the cutting insert 3a-3c.

It is thereafter calculated 209, based on the information obtained of an actual spatial position for said first and second stop surfaces 15a, 15b of the insert seat 6, the information obtained of the spatial deviation between the nominal and projected actual position for said at least one point along the first cutting edge 11a of the cutting insert 3a-3c, and the information obtained of the projected mounted position for the cutting insert 3a-3c, a nominal spatial position for a said first, with the first stop surface 15a of the insert seat 6 associated, contact surface 17a and a nominal spatial position for a said third, with the second stop surface 15a of the insert seat 6 associated, contact surface 17c to be grinded on the cutting insert 3a-3c so as to compensate for said spatial deviation between the nominal and projected actual position for said at least one point along the first cutting edge 11a of the cutting insert 3a-3c when the cutting insert 3a-3c is mounted in the insert seat 6 and the first 17a and third 17c contact surface on the cutting insert 3a-3c abuttingly contact the first 15a and second 15b stop surface of the insert seat (6).

Accordingly, the nominal spatial position for each contact surface 17a, 17c on the cutting insert 3a-3c, in said two-dimensional plane, is calculated such that these together, when bearing on the first 15a and second 15b stop surfaces of the insert seat 6, will guide the cutting insert 3a-3c, and more specifically the first cutting edge 11a or the at least one point thereof, to a desired position at the turning tool 1. This is calculated in such a way that if the cutting edge should be adjusted x µm laterally in one direction as seen in top view, y µm material should be removed from the stop surface located in that direction (relative to the other stop surface) to mention one simple example.

In a last step, such first 17a and third 17c contact surfaces are grinded 210 on the top surface 7 of the cutting insert 3a-3c and thereby a turning tool 1 with an improved location of the surface generating cutting edge 11a obtained. Or, simply put, a turning tool 1 by which flaws as a result of tolerances in a standard production process of specific parts of the turning tool, especially the cutting insert thereof, are corrected to provide a turning tool with very precise positioning of the cutting edge.

It should be mentioned that specific surfaces to be grinded, such as the contact surfaces 17a, 17c of the cutting insert 3a-3c may be present already before the grinding step (such as if an insert with the design of one of the inserts 3a-3c would be provided in this method), i.e. the surfaces exist but are adjusted by the grinding operation, or the grinding step actually creates these surfaces (if an insert of the design of the insert 103 is provided in this method, which is grinded to obtain the insert 3a, as one example - compare Fig 1a and Fig 2a).

The method for producing a cutting insert 3a-3c for a turning tool 1 comprises the following steps 301-306 (Fig. 12).

Firstly, providing 301 a cutting insert 3a-3c, 103 which comprises a top surface 7, 107, an opposite bottom surface 8, 108, and a circumferential side surface 9, 109 connecting the top surface and the bottom surface. The cutting insert comprises a first 10a, 110a and optionally also an opposite second 11b, 111b nose portion provided with a first 11a, 111a and second 11b, 111b cutting edge, respectively, in the same manner as is already described for the cutting insert 3a-3c according to the invention above. A cutting insert 103 to be provided according to one embodiment is shown in Fig 1a-1d, which as stated, in fact show the cutting insert 3a-3c as shown in any of the Figs 2a-2d, 9a-9b or 10a-10b before grinding the contact 17a-17d and clearance 27a-27d surfaces thereof. Hence, the cutting insert 3a-3c, 103 to be provided has / may be defined in relation to the same first RP1, second RP2 and third RP3 reference planes as well as the center axis A1 as described for the cutting inserts 3a-3c according to the invention, although not shown in Figs 1a-1d.

Then, information is provided 302 of a nominal position for at least one point along the first cutting edge 11a in relation to at least one given reference point on the cutting insert 3a-3c, such as the central axis A1 thereof, and of a nominal spatial position for a first contact surface 17a configured to provide a contact point for support of the cutting insert 3a-3c upon arrangement of the cutting insert 3a-3c at a turning tool 1, wherein the nominal spatial position for the first contact surface 17a is a desired spatial position for this surface in relation to the at least one point along the first cutting edge 11a in a modeled, i.e. theoretically perfect, environment, such as in a 3D-cad program. Said nominal spatial position for the first contact surface 17a is located on the top surface 7 of the cutting insert 3a-3c and comprises an extension of the first contact surface 17a in a plane which forms an angle of 90° or at least substantially 90° with the first reference plane RP1 and which forms an angle greater than 0° with the third reference plane RP3.

An actual position of said at least one point along the first cutting edge 11a is thereafter measured 303 in relation to the at least one given reference point A1 on the cutting insert 3a-3c.

It is then calculated 304 a spatial deviation between the nominal and actual position for said at least one point along the first cutting edge 11a of the cutting insert 3a-3c, and further, based on the information of this spatial deviation, it is calculated 305 an adjustment to be made to the nominal spatial position of the first contact surface 17a to compensate for said spatial deviation between the nominal and actual position for said at least one point along the first cutting edge 11a of the cutting insert.

More specifically, the step of calculating 306 an adjustment to be made to the nominal spatial position of the first contact surface 17a comprises calculating an adjustment to be made to the extension of the first contact surface 17a in relation to the third reference plane RP3 so as to amend the angle which the first contact surface 17a forms with the third reference plane RP3 and thereby compensate for said spatial deviation between the nominal and actual position for said at least one point along the first cutting edge 11a by amending the relationship between said at least one point along the first cutting edge 11a and the first contact surface 17a.

Finally, the adjusted first contact surface 17a is grinded 306 on the top surface of the cutting insert 3a-3c based on the adjustment to be made calculated.

It should be mentioned that also in this method the specific surfaces to be grinded, in the form of one or more contact surfaces 17a, 17c of the cutting insert 3a-3c may be present already before the grinding step (such as if an insert with the design of one of the inserts 3a-3c would be provided in this method), i.e. the surfaces exist but are adjusted by the grinding operation, or the grinding step actually creates these surfaces (if an insert of the design of the insert 103 is provided in this method, which is grinded to obtain the insert 3a, as one example - compare Fig 1a and Fig 2a).

All positions provided, measured or calculated, in both methods, are positions with coordinates in at least two directions, in said two-dimensional plane extending in parallel with the first reference plane RP1, in relation to a given reference. A spatial position should be considered to also include an extension of a surface or a part thereof, i.e. a spatial position includes at least two coordinates in said plane, and preferably a large number of coordinates along the surface in question.

It should be clear from the description as a whole that a cutting insert according to the invention may have various numbers of nose portions 10a-10b, cutting edges 11a-11b and contact surfaces 17a-17c. For a cutting insert with two nose portions and several contact surfaces some steps of the methods may then of course be repeated, to calculate suitable positions for and grind the different contact surfaces, in the same way as is described for a first contact surface.

The at least one point along a cutting edge 11a-11b referred to in the description above may be an end point or a center point of the cutting edge, as a few examples. However, preferably several points, such as at least 10, 50, 100 or even more may be used to locate a cutting edge, even if only one could suffice in some cases.

As the bottom surface 8 is a copy of the top surface 7 in the embodiments of the cutting insert 3a-3c shown it is needless to say that this is provided with the same parts and features as the top surface and which are produced in the same way. This may however not be the case, i.e. a cutting insert according to the invention may have top and bottom surfaces with different designs, such as a completely flat bottom surface.

It should be clear from the description as a whole, but is still emphasized, that features of for instance a cutting insert according to the invention as mentioned in any part of the description are descriptive for these features by a cutting insert of the invention in itself, by the turning tool according to the invention comprising such a cutting insert or by a cutting insert included in any of the methods according to the invention and the same applies for all features and all inventions described, if not otherwise stated.

To summarize, the invention provides a turning tool 1, a tool body 2 and a cutting insert 3a-3c providing a an improved ability to adjust certain characteristics thereof, such as positioning of the cutting edge, fixation of the cutting insert during use or load distribution in the cutting insert and/or tool body, to suit the intended use thereof, with respect to such turning tools, tool bodies and cutting inserts already known. This is enabled by the at least one said contact surface 17a-17d located on the top surface 7 of the cutting insert 3a-3c and the at least one said stop surface 15a-15b in the insert seat 6 of the turning tool body 2, especially in combination. Such contact surfaces 17a-d and stop surfaces 15a-15b described enable an effective and stable fixation of the cutting insert in the insert seat during use and positioning of the active cutting edge 11a-11b thereof, to mention a few important examples.

The invention also relates to methods for producing a turning tool 1 and a cutting insert 3a-3c with such advantages, and especially for using these surfaces 17a-17d, 15a-15b to provide a turning tool 1 and a cutting insert with a more precise positioning of the cutting edge 11a-11b. Such tools 1 and inserts 3a-c according to the invention, produced by the methods according to the invention, provide a high performing product for a customer and also a product which is easy to use, as the need for locating the active cutting edge during use, even after indexation of the cutting insert, is eliminated.

The invention is of course not in any way restricted to the embodiments thereof described above. On the contrary, many possibilities to modifications thereof will be apparent to a person with ordinary skill in the art without departing from the basic idea of the invention such as defined in the appended claims.

## Claims

1. A turning tool (1) comprising a tool body (2) and a cutting insert (3a-3c),
the tool body (2) having at one end (4) thereof a coupling portion (20) configured for attachment to a machine tool, and at another end (5) thereof an insert seat (6) configured to accommodate the cutting insert (3a-3c) in a state of use of the turning tool (1),
wherein the insert seat (6) comprises
- a bottom support surface (12) and first (13a) and second (13b) side wall sections extending along at least a part of the bottom support surface (12) on opposite lateral sides thereof, wherein the bottom support surface (12) and the first (13a) and second (13b) side wall sections together define a space (14) for receiving at least a part of the cutting insert (3a-3c) in said state of use, and
- a first stop surface (15a) arranged at the first side wall section (13a) or at a stiff member (16) rigidly connected therewith,
wherein the cutting insert (3a-3c) comprises
- a top surface (7),
- an opposite bottom surface (8) by which the cutting insert (3a-3c) is configured to bear on the bottom support surface (12) of the insert seat (6) in said state of use,
- a circumferential side surface (9) connecting the top surface (7) and the bottom surface (8),
- a first nose portion (10a),
- a first cutting edge (11a) arranged at a transition between the top surface (7) and the circumferential side surface (9) at the first nose portion (10a),
wherein a first reference plane (RP1) is located parallel to and between the top surface (7) and the bottom surface (8), wherein a center axis (A1) of the cutting insert (3a-3c) extends perpendicular to the first reference plane (RP1),
wherein a second reference plane (RP2) extends perpendicular to the first reference plane (RP1) and through a center of the first nose portion (10a) and the center axis (A1) of the cutting insert (3a-3c), and
wherein a third reference plane (RP3) extends perpendicular to the first (RP1) and second (RP2) reference planes and through the center axis (A1) of the cutting insert (3a-3c),
wherein,
the cutting insert (3a-3c) further comprises a first contact surface (17a) associated with the first stop surface (15a) of the insert seat (6),
the first stop surface (15a) of the insert seat (6) is configured to receive the first contact surface (17a) of the cutting insert (3a-3c) bearing against it, to provide a stop for the first contact surface (17a) in a direction along a longitudinal extension of the insert seat (6), measured centrally between a front (24) and a rear end (23) thereof, and thereby to define a fixed position in the insert seat (6) for the cutting insert (3a-3c) in said direction, in said state of use,
***characterized* in that**
the first contact surface (17a) of the cutting insert (3a-3c) is arranged at the top surface (7) thereof and configured to extend away from adjacent parts of the top surface (7) from a lower end (18) to an upper end (19) of the first contact surface (17a) in a plane which forms an angle with the first reference plane (RP1), wherein a distance between the lower end (18) of the first contact surface (17a) and the first reference plane (RP1) is smaller than a distance between the upper end (19) of the first contact surface (17a) and the first reference plane (RP1), as measured in a direction in parallel with the center axis (A1) of the cutting insert (3a-3c), and
that the first stop surface (15a) of the insert seat (6) is arranged at, or at a stiff member (16) rigidly connected with, an upper part of the first side wall section (13a).

2. A turning tool (1) according to claim 1, ***characterized* in that** the first stop surface (15a) of the insert seat (6) is arranged to face in a direction away from the rear end (23) of the insert seat (6) and that the first contact surface (17a) of the cutting insert (3a-3c) is arranged to face in a direction away from the first nose portion (10a) of the cutting insert (3a-3c).

3. A turning tool (1) according to claim 1 or 2, ***characterized* in that** the cutting insert (3a-3c) further comprises a second, with respect to the first (10a), opposite facing nose portion (10b) and a second cutting edge (11b), wherein the second cutting edge (11b) is arranged at a transition between the top surface (7) and the circumferential side surface (9) at the second nose portion (10b), and that the cutting insert (3a-3c) further comprises a second contact surface (17b),
wherein the second contact surface (17b) of the cutting insert (3a-3c) is arranged at the top surface (7) thereof and configured to extend away from adjacent parts of the top surface (7) from a lower end (18) to an upper end (19) of the second contact surface (17b) in a plane which forms an angle with the first reference plane (RP1), wherein a distance between the lower end (18) of the second contact surface (17b) and the first reference plane (RP1) is smaller than a distance between the upper end (19) of the second contact surface (17b) and the first reference plane (RP1), as measured in a direction in parallel with the center axis (A1) of the cutting insert (3a-3c), and
that the first (17a) and second (17b) contact surfaces are arranged on opposite sides of the third reference plane (RP3).

4. A turning tool (1) according to any of the preceding claims, ***characterized* in that** the insert seat (6) further comprises
- a second stop surface (15b) arranged at the second side wall section (13b) or at a stiff member (16) rigidly connected therewith,
and that the cutting insert (3a-3c) further comprises a third contact surface (17c) associated with the second stop surface (15b) of the insert seat (6),
wherein the third contact surface (17c) of the cutting insert (3a-3c) is arranged at the top surface (7) thereof and configured to extend away from adjacent parts of the top surface (7) from a lower end (18) to an upper end (19) of the third contact surface (17b) in a plane which forms an angle with the first reference plane (RP1), wherein a distance between the lower end (18) of the third contact surface (17a) and the first reference plane (RP1) is smaller than a distance between the upper end (19) of the third contact surface (17c) and the first reference plane (RP1), as measured in a direction in parallel with the center axis (A1) of the cutting insert (3a-3c), and
that the first (17a) and third (17c) contact surfaces are arranged on the same side of the third reference plane (RP3) and on opposite sides of the second reference plane (RP2).

5. A turning tool (1) according to claims 3 and 4, ***characterized* in that** the cutting insert (3a-3c) further comprises a fourth contact surface (17d) associated with the first stop surface (15a) of the insert seat (6),
wherein the fourth contact surface (17d) of the cutting insert (3a-3c) is arranged at the top surface (7) thereof and configured to extend away from adjacent parts of the top surface (7) from a lower end (18) to an upper end (19) of the fourth contact surface (17d) in a plane which forms an angle with the first reference plane (RP1), wherein a distance between the lower end (18) of the fourth contact surface (17d) and the first reference plane (RP1) is smaller than a distance between the upper end (19) of the fourth contact surface (17d) and the first reference plane (RP1), as measured in a direction in parallel with the center axis (A1) of the cutting insert (3a-3c), and
that the second (17b) and fourth (17d) contact surfaces are arranged on the same side of the third reference plane (RP3) and on opposite sides of the second reference plane (RP2).

6. A turning tool (1) according to any of claims 4-5, ***characterized* in that** the first (15a) and second (15b) stop surfaces each has a longitudinal extension, in a plane in parallel with a plane in which the bottom support surface (12) extends, such that the distance between the first (15a) and second (15b) stop surfaces decreases in a direction towards the rear end (23) of the insert seat (6), and
that the first (17a) and third (17c) contact surfaces each has a longitudinal extension, in a plane in parallel with the first reference plane (RP1), such that the distance between the first (17a) and third (17c) contact surfaces decreases in a direction away from the third reference plane (RP3).

7. A turning tool (1) according to claim 6, ***characterized* in that** the first (15a) and second (15b) stop surfaces are arranged to form an angle between them of 30-150°, preferably 70-150°, most preferred 85-125°, and
that the first (17a) and third (17c) contact surfaces are arranged to form a corresponding angle (α1- α3) between them, as measured within the cutting insert (3a-3c).

8. A turning tool (1) according to any of the preceding claims, ***characterized* in that** the insert seat (6) further comprises
- a stiff member (16) configured to be rigidly connected, preferably formed in one piece, by a first end portion (21a) thereof to an upper part of the first side wall section (13a) and to protrude therefrom over said space (14) towards an upper part of the opposite second side wall section (13b), wherein the first stop surface (15a) of the insert seat (6) is arranged at said stiff member (16).

9. A turning tool (1) according to claim 8, ***characterized* in that** the stiff member (16) is further configured to be rigidly connected, preferably formed in one piece, by a second end portion (21b) thereof to the upper part of the second side wall section (13b) so as to extend between and rigidly interconnect the upper parts of the first (13a) and second (13b) side wall sections over said space (14).

10. A turning tool (1) according to any of the preceding claims, ***characterized* in that** the first contact surface (17a) of the cutting insert (3a-3c) is a machined, especially grinded, surface.

11. A cutting insert (3a-3c) intended to be arranged at a tool (1) to be used for turning, comprising
- a top surface (7),
- an opposite bottom surface (8),
- a circumferential side surface (9) connecting the top surface (7) and the bottom surface (8),
- a first nose portion (10a),
- a first cutting edge (11a) arranged at a transition between the top surface (7) and the circumferential side surface (9) at the first nose portion (10a), and
- a first contact surface (17a) configured to provide a contact point for support of the cutting insert (3a-3c) upon arrangement of the cutting insert (3a-3c) at a said turning tool (1),
wherein a first reference plane (RP1) is located parallel to and between the top surface (7) and the bottom surface (8), wherein a center axis (A1) of the cutting insert (3a-3c) extends perpendicular to the first reference plane (RP1),
wherein a second reference plane (RP2) extends perpendicular to the first reference plane (RP1) and through a center of the first nose portion (10a) and the center axis (A1) of the cutting insert (3a-3c), and
wherein a third reference plane (RP3) extends perpendicular to the first (RP1) and second (RP2) reference planes and through the center axis (A1) of the cutting insert (3a-3c),
***characterized* in that**
the first contact surface (17a) is arranged at the top surface (7) of the cutting insert (3a-3c) and configured to extend away from adjacent parts of the top surface (7) from a lower end (18) to an upper end (19) of the first contact surface (17a) in a plane which forms an angle with the first reference plane (RP1), wherein a distance between the lower end (18) of the first contact surface (17a) and the first reference plane (RP1) is smaller than a distance between the upper end (19) of the first contact surface (17a) and the first reference plane (RP1), as measured in a direction in parallel with the center axis (A1) of the cutting insert (3a-3c).

12. A cutting insert (3a-3c) according to claim 11, ***characterized* in that** the cutting insert (3a-3c) further comprises a second, with respect to the first (10a), opposite facing nose portion (10b) and a second cutting edge (11b), wherein the second cutting edge (11b) is arranged at a transition between the top surface (7) and the circumferential side surface (9) at the second nose portion (10b).

13. A cutting insert (3a-3c) according to claim 12, ***characterized* in that** the cutting insert (3a-3c) further comprises a second contact surface (17b),
wherein the second contact surface (17b) of the cutting insert (3a-3c) is arranged at the top surface (7) thereof and configured to extend away from adjacent parts of the top surface (7) from a lower end (18) to an upper end (19) of the second contact surface (17b) in a plane which forms an angle with the first reference plane (RP1), wherein a distance between the lower end (18) of the second contact surface (17b) and the first reference plane (RP1) is smaller than a distance between the upper end (19) of the second contact surface (17b) and the first reference plane (RP1), as measured in a direction in parallel with the center axis (A1) of the cutting insert (3a-3c), and
that the first (17a) and second (17b) contact surfaces are arranged on opposite sides of the third reference plane (RP3).

14. A cutting insert (3a-3c) according to any of the claims 11-13, ***characterized* in that** the cutting insert (3a-3c) further comprises a third contact surface (17c),
wherein the third contact surface (17c) of the cutting insert (3a-3c) is arranged at the top surface (7) thereof and configured to extend away from adjacent parts of the top surface (7) from a lower end (18) to an upper end (19) of the third contact surface (17b) in a plane which forms an angle with the first reference plane (RP1), wherein a distance between the lower end (18) of the third contact surface (17a) and the first reference plane (RP1) is smaller than a distance between the upper end (19) of the third contact surface (17c) and the first reference plane (RP1), as measured in a direction in parallel with the center axis (A1) of the cutting insert (3a-3c), and
that the first (17a) and third (17c) contact surfaces are arranged on the same side of the third reference plane (RP3) and on opposite sides of the second reference plane (RP2).

15. A cutting insert (3a-3c) according to claims 13-14, ***characterized* in that** the cutting insert (3a-3c) further comprises a fourth contact surface (17d),
wherein the fourth contact surface (17d) of the cutting insert (3a-3c) is arranged at the top surface (7) thereof and configured to extend away from adjacent parts of the top surface (7) from a lower end (18) to an upper end (19) of the fourth contact surface (17d) in a plane which forms an angle with the first reference plane (RP1), wherein a distance between the lower end (18) of the fourth contact surface (17d) and the first reference plane (RP1) is smaller than a distance between the upper end (19) of the fourth contact surface (17d) and the first reference plane (RP1), as measured in a direction in parallel with the center axis (A1) of the cutting insert (3a-3c), and
that the second (17b) and fourth (17d) contact surfaces are arranged on the same side of the third reference plane (RP3) and on opposite sides of the second reference plane (RP2).

16. A cutting insert (3a-3c) according to any of the claims 14-15, ***characterized* in that** that the first (17a) and third (17c) contact surfaces each has a longitudinal extension, in a plane in parallel with the first reference plane (RP1), such that the distance between the first (17a) and third (17c) contact surfaces decreases in a direction away from the third reference plane (RP3).

17. A cutting insert (3a-3c) according to claim 16, ***characterized* in that** the first (17a) and third (17c) contact surfaces are arranged to form an angle between them of 30-150°, preferably 70-150°, most preferred 85-125°, as measured within the cutting insert (3a-3c).

18. A cutting insert (3a-3c) according to any of the preceding claims, ***characterized* in that** the first contact surface (17a) extends in a plane which forms an angle of 90° or at least substantially 90° with the first reference plane (RP1),
that the cutting insert (3a-3c) further comprises a first clearance surface (27a) adjacent to the first contact surface (17a), which first clearance surface (27a) is arranged to extend away from the lower end (18) of the first contact surface (17a) to the transition between the top surface (7) and the circumferential side surface (9) of the cutting insert (3a-3c) so as to provide a flat surface directly in front of the first contact surface (17a), and
that the first contact surface (17a) forms an angle of more than 90°, preferably at least 95°, more preferred at least 100° with the first clearance surface (27a).

19. A cutting insert (3a-3c) according to any of the preceding claims, ***characterized* in that** the first contact surface (17a) of the cutting insert (3a-3c) is a machined, especially grinded, surface.

20. A tool body (2) intended to be provided with a cutting insert (3a-3c) comprising a first nose portion (10a) and a first contact surface (17a) provided on a top surface (7) of the cutting insert (3a-3c) and facing away from the first nose portion (10a), so as to together form a turning tool (1),
the tool body (2) having at one end (4) thereof a coupling portion (20) configured for attachment to a machine tool, and at another end (5) thereof an insert seat (6) configured to accommodate a said cutting insert (3a-3c),
wherein the insert seat (6) comprises
- a bottom support surface (12) and first (13a) and second (13b) side wall sections extending along at least a part of the bottom support surface (12) on opposite lateral sides thereof, wherein the bottom support surface (12) and the first (13a) and second (13b) side wall sections together define a space (14) for receiving at least a part of a said cutting insert (3a-3c), and
- a first stop surface (15a) arranged at the first side wall section (13a) or at a stiff member (16) rigidly connected therewith and to face in a direction away from a rear end (23) towards a front end (24) of the insert seat (6), wherein the first stop surface (15a) is configured to receive and provide a stop for the first contact surface (17a) of a said cutting insert (3a-3c) in a direction along a longitudinal extension of the insert seat (6), measured centrally between the front (24) and the rear end (23) thereof, and thereby to define a fixed position in said direction for a said cutting insert (3a-3c) upon receival thereof in the insert seat (6),
***characterized* in that** the first stop surface (15a) of the insert seat (6) is arranged at, or at a stiff member (16) rigidly connected with, an upper part of the first side wall section (13a).

21. A tool body (2) according to any of the claims 19-20, ***characterized* in that** the insert seat (6) further comprises
a stiff member (16) configured to be rigidly connected by a first end portion (21a) thereof to an upper part of the first side wall section (13a) and to protrude therefrom over said space (14) towards an upper part of the opposite second side wall section (13b), wherein the first stop surface (15a) of the insert seat (6) is arranged at said stiff member (16).

22. A tool body (2) according to claim 21, ***characterized* in that** the stiff member (16) is further configured to be rigidly connected by a second end portion (21b) thereof to the upper part of the second side wall section (13b) so as to extend between and rigidly interconnect the upper parts of the first (13a) and second (13b) side wall sections over said space (14).

23. A method for producing a turning tool (1) comprising a tool body (2) and a cutting insert (3a-3c), wherein the method comprises the steps of:
a) Providing a tool body (2) having at one end (4) thereof a coupling portion (20) configured for attachment to a machine tool, and at another end (5) thereof an insert seat (6) configured to accommodate the cutting insert (3a-3c) in a mounted state of the turning tool (1),
wherein the insert seat (6) comprises
- a bottom support surface (12) and first (13a) and second (13b) side wall sections extending along at least a part of the bottom support surface (12) on opposite lateral sides thereof, wherein the bottom support surface (12) and the first (13a) and second (13b) side wall sections together define a space (14) for receiving at least a part of the cutting insert (3a-3c) in said mounted state,
- a first stop surface (15a) arranged at the first side wall section (13a) or at a stiff member (16) rigidly connected therewith,
b) Providing a cutting insert (3a-3c) comprising
- a top surface (7),
- an opposite bottom surface (8) by which the cutting insert (3a-3c) is configured to bear on the bottom support surface (12) of the insert seat (6) in said mounted position,
- a circumferential side surface (9) connecting the top surface (7) and the bottom surface (8),
- a first nose portion (10a),
- a first cutting edge (11a) arranged at a transition between the top surface (7) and the circumferential side surface (9) at the first nose portion (10a),
- at least one contact surface configured to provide a contact point for support of the cutting insert (3a-3c) in said mounted position,
wherein a first reference plane (RP1) is located parallel to and between the top surface (7) and the bottom surface (8), wherein a center axis (A1) of the cutting insert (3a-3c) extends perpendicular to the first reference plane (RP1),
wherein a second reference plane (RP2) extends perpendicular to the first reference plane (RP1) and through a center of the first nose portion (10a) and the center axis (A1) of the cutting insert (3a-3c), and
wherein a third reference plane (RP3) extends perpendicular to the first (RP1) and second (RP2) reference planes and through the center axis (A1) of the cutting insert (3a-3c),
c) Measuring and/or providing information of an actual spatial position for said first stop surface (15a),
d) Providing information of a nominal position for at least one point along the first cutting edge (11a) of the cutting insert (3a-3c) in a said mounted state,
e) Measuring and/or providing information of the position of the at least one contact surface in the insert seat (6),
f) Measuring corresponding at least one contact surface on the cutting insert (3a-3c) and a position of said at least one point along the first cutting edge (11a) in relation to at least one given reference point (A1) on the cutting insert (3a-3c),
g) Calculating, based on the information obtained from steps e) and f) and on the assumption that the cutting insert (3a-3c) would be arranged in the insert seat (6) with its said at least one contact surface in abutting contact with the corresponding contact surface in the insert seat (6), a projected mounted position for the cutting insert (3a-3c) and thereby a projected actual position for the at least one point along the first cutting edge (11a) of the cutting insert (3a-3c) in the mounted state,
h) Calculating a spatial deviation between the nominal and projected actual position for said at least one point along the first cutting edge (11a) of the cutting insert (3a-3c),
i) Calculating, based on the information obtained from steps c) and h) and of said projected mounted position for the cutting insert (3a-3c), a nominal spatial position for a first, with the first stop surface (15a) of the insert seat (6) associated, contact surface (17a) to be grinded on the cutting insert (3a-3c) so as to compensate for said spatial deviation between the nominal and projected actual position for said at least one point along the first cutting edge (11a) of the cutting insert (3a-3c) when the cutting insert (3a-3c) is mounted in the insert seat (6) and the first contact surface (17a) on the cutting insert (3a-3c) abuttingly contacts the first stop surface (15a) of the insert seat (6),
j) Grinding, based on the information obtained from step i), such a first contact surface (17a) on the cutting insert (3a-3c).

24. A method for producing a turning tool (1) according to claim 23 ***characterized* in that** the insert seat (6) of the tool body (2) provided in step a) comprises:
- a first stop surface (15a) arranged at an upper part of the first side wall section (13a) or at a stiff member (16) rigidly connected with said upper part, and
that step j) more specifically comprises:
Grinding, based on the information obtained from step i), such a first contact surface (17a) on the top surface (7) of the cutting insert (3a-3c).

25. A method for producing a turning tool (1) according to claim 24 ***characterized* in that** step a) comprises providing a said tool body (2) with a said insert seat (6) which further comprises:
- a stiff member (16) configured to be rigidly connected, preferably formed in one piece, by a first end portion (21a) thereof to an upper part of the first side wall section (13a) and to protrude therefrom over said space (14) towards an upper part of the opposite second side wall section (13b), wherein the first stop surface (15a) is arranged at the stiff member (16).

26. A method for producing a turning tool (1) according to claim 25 ***characterized* in that** step a) comprises providing a said tool body (2) with a said insert seat (6) comprising a said stiff member (16) which is further configured to be rigidly connected, preferably formed in one piece, by a second end portion (21b) thereof to the upper part of the second side wall section (13b) so as to extend between and rigidly interconnect the upper parts of the first (13a) and second (13b) side wall sections over said space (14).

27. A method for producing a cutting insert (3a-3c) intended to be arranged at a tool (1) to be used for turning, wherein the method comprises the steps of:
a') Providing a cutting insert (3a-3c) comprising
- a top surface (7),
- an opposite bottom surface (8),
- a circumferential side surface (9) connecting the top surface (7) and the bottom surface (8),
- a first nose portion (10a), and
- a first cutting edge (11a) arranged at a transition between the top surface (7) and the circumferential side surface (9) at the first nose portion (10a),
wherein a first reference plane (RP1) is located parallel to and between the top surface (7) and the bottom surface (8), wherein a center axis (A1) of the cutting insert (3a-3c) extends perpendicular to the first reference plane (RP1),
wherein a second reference plane (RP2) extends perpendicular to the first reference plane (RP1) and through a center of the first nose portion (10a) and the center axis (A1) of the cutting insert (3a-3c), and
wherein a third reference plane (RP3) extends perpendicular to the first (RP1) and second (RP2) reference planes and through the center axis (A1) of the cutting insert (3a-3c),
b') Providing information of a nominal position for at least one point along the first cutting edge (11a) in relation to at least one given reference point (A1) on the cutting insert (3a-3c), and of a nominal spatial position for a first contact surface (17a) configured to provide a contact point for support of the cutting insert (3a-3c) upon arrangement of the cutting insert (3a-3c) at a said turning tool (1), wherein the nominal spatial position for the first contact surface (17a) is a desired spatial position for this surface in relation to the at least one point along the first cutting edge (11a) in a modeled environment,
c') Measuring an actual position of said at least one point along the first cutting edge (11a) in relation to the at least one given reference point (A1) on the cutting insert (3a-3c),
d') Calculating a spatial deviation between the nominal and actual position for said at least one point along the first cutting edge (11a) of the cutting insert (3a-3c),
e') Calculating, based on the information obtained from step d'), an adjustment to be made to the nominal spatial position of the first contact surface (17a) to compensate for said spatial deviation between the nominal and actual position for said at least one point along the first cutting edge (11a) of the cutting insert,
f') Grinding, based on the information obtained from step e'), an adjusted first contact surface (17a) on the cutting insert (3a-3c).

28. A method for producing a cutting insert (3a-3c) according to claim 27, ***characterized* in that** the nominal spatial position for the first contact surface (17a) is located on the top surface (7) of the cutting insert (3a-3c), and
that step f') more specifically comprises:
Grinding, based on the information obtained from step e'), the adjusted first contact surface (17a) on the top surface of the cutting insert (3a-3c).

29. A method for producing a cutting insert (3a-3c) according to any of the claims 27-28, ***characterized* in that** the nominal spatial position for the first contact surface (17a) comprises an extension thereof in a plane which forms an angle of 90° or at least substantially 90° with the first reference plane (RP1) and which forms an angle greater than 0° with the third reference plane (RP3), and
that step e') of calculating an adjustment to be made to the nominal spatial position of the first contact surface (17a) comprises calculating an adjustment to be made to the extension of the first contact surface (17a) in relation to the third reference plane (RP3) so as to amend the angle which the first contact surface (17a) forms with the third reference plane (RP3).
